# EUROPÄISCHE PATENTSCHRIFT

(11) **EP 2 788 618 B1**
(45) Veröffentlichungstag und Bekanntmachung des Hinweises auf die Patenterteilung: **29.04.2020**
(21) Anmeldenummer: 12794333.0
(22) Anmeldetag: 30.11.2012
(51) Int. Cl.: F03D 1/06, F03D 1/00

(54) **HINTERKASTEN, ROTORBLATT MIT HINTERKASTEN UND WINDENERGIEANLAGE MIT SOLCHEM ROTORBLATT**
REAR CASING, ROTOR BLADE WITH REAR CASING, AND A WIND TURBINE THAT COMPRISES SUCH A ROTOR BLADE
CAISSON ARRIÈRE, PALE DE ROTOR AVEC CAISSON ARRIÈRE ET ÉOLIENNE ÉQUIPÉE D'UNE PALE DE ROTOR

(30) Priorität: 08.12.2011 DE 102011088048; 13.06.2012 DE 102012209935
(43) Veröffentlichungstag der Anmeldung: 15.10.2014
(73) Patentinhaber: Wobben Properties GmbH, 26607 Aurich (DE)
(72) Erfinder: HOFFMANN, Alexander, 26721 Emden (DE); KANNENBERG, Johannes, 26603 Aurich (DE); BAKER, Laurence, 26605 Aurich (DE); SPIETH, Falk, 26605 Aurich (DE)
(74) Vertreter: Eisenführ Speiser
(86) Internationale Anmeldenummer: PCT/EP2012/074041
(87) Internationale Veröffentlichungsnummer: WO 2013/083481

(56) Entgegenhaltungen:
- WO-A2-2008/052677
- WO-A2-2011/088835
- DE-U1-202011 103 091
- GB-A- 2 062 120
- US-A- 4 618 313
- US-A- 5 320 491
- US-A1- 2009 290 982
- US-A1- 2011 142 668

## Beschreibung

Die vorliegende Erfindung betrifft einen Hinterkasten für ein Rotorblatt, insbesondere einer Windenergieanlage, mit einer druckseitigen Fläche, einer saugseitigen Fläche, einer die druck- und saugseitige Flächen trennenden Hinterkante, und einer der Hinterkante gegenüberliegenden Verbindungsseite, welche zur Anbringung an einer korrespondierenden Verbindungsfläche des Rotorblatts angepasst ist.

Die Erfindung betrifft weiterhin ein Rotorblatt für eine Windenergieanlage, mit einem tragenden Teil, einer von dem tragenden Teil umfassten Rotorblattwurzel zur Anbringung an einem Rotor, einer Windenergieanlage, einer druckseitigen Blattfläche, einer saugseitigen Blattfläche, und einer die druck- und die saugseitige Fläche trennenden Hinterkante. Zudem betrifft die Erfindung eine Windenergieanlage.

Windenergieanlagen finden aufgrund der verstärkten Bemühungen auf dem Gebiet der Stromerzeugung aus regenerativen Energiequellen zunehmend stärkere Anwendung.

Hierbei werden stetig neue Wege gesucht, die bekannten Windenergieanlagen leistungsfähiger und effizienter zu gestalten.

Es sind beispielsweise Windenergieanlagen bekannt, die in Abkehr von traditionellen Rotorblattformen Rotorblätter mit anschmiegsamen Blattflächen verwenden. Hierbei nimmt die maximale Profilbreite des Rotorblatts, also die Länge der Sehne zwischen Hinterkante und vorderstem Punkt der Rotorblatt-Nase im Querschnitt nicht in einem mittleren Bereich des Rotorblatts sondern sehr nahe am Endbereich des Rotorblatts auf der Seite der Rotornabe ihren maximalen Wert an. Hierdurch ist entgegen langjähriger Vorurteile in der Branche eine deutliche Effizienzsteigerung erzielt worden. Eine Windenergieanlage mit derartigem Rotorblatt ist beispielsweise aus EP 1 514 023 B1 bekannt.

Diese nabenseitige Erweiterung der Fläche des Rotorblatts wird durch das Anbringen eines Hinterkastens an dem Rotorblatt gewährleistet, welcher seinerseits ebenfalls eine Hinterkante aufweist, die fluchtend mit der Hinterkante des Rotorblatts ausgerichtet wird, wenn der Hinterkasten auf dem Rotorblatt angebracht wird.

Insbesondere bei größeren Windenergieanlagen mit Turmhöhen von oberhalb 80 m stellt sich nach dem Stand der Technik allerdings das Problem ein, dass die Rotorblätter mit entsprechendem Hinterkasten eine derartig große Profilbreite aufweisen, dass sie nur unter großem Aufwand zu transportieren sind.

Diesem Problem wurde bislang dadurch begegnet, dass der Hinterkasten separat zum Rotorblatt zum Aufstellort transportiert wurde und dort am Rotorblatt angebracht wurde. Hierdurch entsteht zusätzlicher logistischer und zeitlicher Aufwand.

US 2011/0142668 A1 offenbart ein Rotorblatt für eine Windenergieanlage, welches sich aus einem oberen und einem unteren Schalenelement zusammensetzt, die unter Verwendung von Kantenstrukturelementen oder Verbindungskappen an der Vorder- und der Hinterkante miteinander verbunden werden.

GB 2 062 120 A offenbart eine Struktureinheit einer strömungstechnischen Vorrichtung, welche sich in Strömungsrichtung aus mehreren hintereinander angeordneten Strukturelementen zusammensetzt, die miteinander verbunden werden.

DE 20 2011 103 091 U1 oder WO 2011/088835 A2 offenbaren Rotorblätter welche im nabenseitigen bzw. wurzelblattseitigen Abschnitt des Rotorblattes mit einem Tragflächenabschnitt bzw. Erweiterungsabschnitt ausgerüstet sind. Tragflächenabschnitt oder Erweiterungsabschnitt weisen jeweils mehrere in Längsrichtung des Rotorblattes nebeneinander angeordnete einzelne Segmente auf, welche entsprechend dem kurvenförmigen Verlauf der zu erzeugenden Strömungsfläche entsprechend am Rotorblatt befestigt werden.

WO 2008/0052677 A1 offenbart ein Rotorblatt mit einem verwindbaren Zentral-Tragholm, der von einer Vielzahl untereinander beweglich verbundener Vorderkanten- und Hinterkantenverkleidungen eingehaust wird und somit eine an sich ändernde Windbedingungen anpassbare Form aufweist.

US 4,618,313 A offenbart einen Flügel eines Axialpropellers mit einer geraden Sehne, der an seiner Hinterkante mit einer einteiligen, im Winkel zur Sehne des Flügels geneigt ausgerichteten Klappe ausgerüstet ist.

Der vorliegenden Erfindung lag somit die Aufgabe zugrunde einen Hinterkasten, ein Rotorblatt und eine Windenergieanlage anzugeben, bei der die vorstehend erwähnten Nachteile möglichst abgemildert werden.

Die Erfindung löst die ihr zugrunde liegende Aufgabe bei einem Hinterkasten der eingangs genannten Art, indem der Hinterkasten in ein die Verbindungsseite aufweisendes Fußsegment und ein oder mehrere die Hinterkante aufweisende, mit dem Fußsegment koppelbare Kopfsegmente unterteilt ist. Die Erfindung macht sich die Erkenntnis zunutze, dass eine wesentliche Zeitersparnis und Qualitätsverbesserung dadurch erreicht werden kann, dass all jene Arbeits- bzw. Fertigungsschritte, die mit hohem Aufwand verbunden sind, beispielsweise weil sie hohe Fertigungspräzision erfordern, nach Möglichkeit nicht am Aufstellort vorgenommen werden sollen, sondern bereits im Werk. Ein Schritt, der ein hohes Maß an Fertigungs- bzw. Montagepräzision erfordert, ist das Verbinden der Verbindungsseite des Hinterkastens mit der Verbindungsfläche des Rotorblatts. Dies liegt in erster Linie an dem Krümmungs- bzw. Kurvenverlauf der druck- und saugseitigen Flächenkanten auf der Verbindungsseite des Hinterkastens. Der erfindungsgemäß gestaltete Hinterkasten erlaubt aufgrund seiner Unterteilung in ein Fußsegment und ein oder mehrere Kopfsegmente das Anbringen des Fußsegments ab Werk. Aufgrund der koppelbaren Gestaltung des Fußsegments und des oder der Kopfsegmente ist eine nachträgliche Anbringung des oder der Kopfsegmente an dem Fußsegment wahlweise ab Werk oder am Aufstellort möglich. Durch die Kopplung, die bereits bei der Herstellung des Hinterkastens angelegt ist, wird beim nachträglichen Anbringen des oder der Kopfsegmente am Aufstellort eine deutliche Zeit- und Kostenersparnis erzielt, während gleichzeitig durch vorheriges Anbringen des Fußsegments am Rotorblatt optional eine weitere Effizienzsteigerung möglich ist.

Die Erfindung wird dadurch vorteilhaft weitergebildet, dass das Fußsegment für jedes Kopfsegment eine separate Unterteilungsebene aufweist, in welcher das oder die Kopfsegmente mit dem Fußsegment koppelbar sind. Durch das Bereitstellen separater Unterteilungsebenen für jedes Kopfsegment wird die Zuordnung zu einem die jeweiligen Unterteilungsebene aufweisenden Bereich des Fußsegments vereinfacht.

Gemäß einer alternativen vorteilhaften Ausführungsform weist das Fußsegment für mehrere oder sämtliche Kopfsegmente eine durchgehende Unterteilungsebene auf, in welcher die jeweiligen Kopfsegmente mit dem Fußsegment koppelbar sind. Eine durchgehende, sich über mehrere oder sämtliche Zuordnungsbereiche zwischen Fußsegment und Kopfsegmenten erstreckende Unterteilungsebene bietet den Vorteil, dass mehrere Segmente hintereinander auf der gemeinsamen Unterteilungsebene mit dem Fußsegment gekoppelt werden können, und sich dabei gegenseitig abstützen. Hierdurch wird der Aufwand, die Position der mehreren Kopfsegmente zu fixieren, deutlich verringert.

Gemäß einer weiteren bevorzugten Ausführungsform der Erfindung ist die eine bzw. sind die mehreren Unterteilungsebenen derart angeordnet, dass die maximale Profilbreite des Rotorblatts von 4 m oder weniger liegt, wenn das Fußsegment mit dem Rotorblatt verbunden ist. Dadurch, dass eine Längsteilung gewählt wird, die zu einer maximalen Profilbreite in dem vorstehend erwähnten Bereich führt, ist die Transportfähigkeit des Rotorblatts samt vorab angebrachtem Fußsegment des Hinterkastens deutlich verbessert.

Die Unterteilungsebenen sind vorzugsweise im Wesentlichen in Längsrichtung der Rotorblattachse ausgerichtet. Vorzugsweise ist zwischen der Rotorblattachse und der bzw. den Unterteilungsebenen ein Winkel in einem Bereich von 30° oder weniger aufgespannt.

Erfindungsgemäß sind das Fußsegment und das oder die Kopfsegmente formschlüssig miteinander koppelbar.

In einer besonders bevorzugten Ausführungsform des Hinterkastens erfolgt die formschlüssige Koppelung zwischen dem Fußsegment und dem oder den Kopfsegmenten mittels einer scharnierartigen Verbindung.

Erfindungsgemäß weist hierbei das Fußsegment zur formschlüssigen Kopplung eine Vielzahl zueinander beabstandeter Vorsprünge mit einer ersten Ausnehmung auf, und das Kopfsegment oder die Kopfsegmente weisen jeweils eine Vielzahl zueinander beabstandeter Vorsprünge mit einer zweiten Ausnehmung auf, wobei die Vorsprünge des Fußsegments und die Vorsprünge des oder der Kopfsegmente fluchtend zueinander ausrichtbar sind. Fluchtend wird hierbei als bezogen auf die Mittelpunkte der einander zugewandten Enden der ersten und zweiten Ausnehmungen verstanden und die Abstände sind hierbei vorzugsweise so gewählt, dass ein Vorsprung des Fußsegments in den Abstand zwischen zwei benachbarten Vorsprüngen des oder der Kopfsegmente eingreifen kann und umgekehrt. Ein Vorsprung des oder der Kopfsegmente kann dementsprechend in den Abstand zwischen zwei benachbarten Vorsprüngen des Fußsegments eingreifen.

Der Vorteil einer solchen scharnierähnlichen Kopplung des Fußsegments mit dem oder den Kopfsegmenten ist insbesondere darin zu sehen, dass die Ausrichtung der Teile zueinander sehr einfach ist, und zum Verbinden einer Vielzahl aufeinander ausgerichteter, hintereinander angeordneter Vorsprünge mit Ausnehmungen mittels eines einzigen Verbindungsglieds, das nach Art eines Scharnierdorns ausgebildet sein kann, ermöglicht wird.

Der Hinterkasten gemäß der vorstehend beschriebenen Ausführungsform wird vorteilhaft durch einen länglichen Körper weitergebildet, dessen Querschnitt dem Querschnitt der ersten und zweiten Ausnehmungen angepasst ist, und welcher in die Vielzahl erster und zweiter Ausnehmungen einführbar ist, wenn diese im Wesentlichen fluchtend zueinander ausgerichtet sind. Vorzugsweise ist der Durchmesser der ersten Ausnehmungen im Wesentlichen gleich dem Durchmesser der zweiten Ausnehmungen. Besonders bevorzugt ist der Durchmesser des länglichen Körpers derart an den Durchmesser der ersten und zweiten Ausnehmungen angepasst, dass er spielfrei bzw. möglichst weitgehend spielfrei in den ersten und zweiten Ausnehmungen aufgenommen wird. Je genauer die Passung zwischen dem länglichen Körper und den Ausnehmungen ist, desto geringer ist das Bewegungsspiel zwischen dem oder den Kopfsegmenten und dem Fußsegment, was sich positiv auf die Standfestigkeit des Rotorblatts insgesamt auswirkt.

In einer weiteren bevorzugten Ausführungsform des Hinterkastens ist der längliche Körper so ausgebildet, dass er sich in montiertem Zustand durch die Vielzahl der Vorsprünge des Fußsegments und des oder der Kopfsegmente hindurch erstreckt. Hierdurch wird eine Verbindung geschaffen, die derjenigen eines Stangenscharniers bzw. Klavierbandes ähnelt.

Vorzugsweise besteht der längliche Körper aus einem Faserverbundwerkstoff, insbesondere aus glasfaserverstärktem Kunststoff. Der Vorteil eines entsprechend ausgebildeten länglichen Körpers ist darin zu sehen, dass der längliche Körper eine gewisse Elastizität aufweist, die es ermöglicht, den länglichen Körper entlang einer gekrümmten Bahn zu verformen und auch durch solche Vorsprünge hindurchzuführen, die nicht streng koaxial bezüglich ihrer Ausnehmungen zueinander ausgerichtet sind, sondern entlang einer gekrümmten Bahn angeordnet sind.

Vorzugsweise ist der erfindungsgemäße Hinterkasten so ausgebildet, dass die Vorsprünge des Fußsegments und des oder der Kopfsegmente entlang einer gekrümmten Bahn angeordnet sind. Besonders bevorzugt entspricht die Krümmung dieser Bahn dem Konturverlauf des Rotorblatts. In Kombination mit einem elastischen länglichen Körper führt dies dazu, dass die formschlüssige Verbindung unmittelbar an der Außenkante der benachbarten Segmente, also des Fußsegments und des oder der Kopfsegmente angeordnet sein kann, beispielsweise direkt an deren Wandung. Der sich durch die Krümmung der Wandung ergebene Krümmungsverlauf ist der Konturverlauf des Rotorblatts und sorgt zugleich dafür, dass eine Schwenkbewegung zwischen dem Fußsegment und dem oder den Kopfsegmenten, die bei einem Scharnier normalerweise erlaubt ist, infolge der Krümmung verhindert wird. Dies erhöht weiter die Stabilität des Rotorblatts.

Gemäß einer weiteren bevorzugten Ausführungsform ist die Wandung der ersten und zweiten Ausnehmungen abschnittsweise oder vollständig mit einem Kunststoff ausgekleidet. Vorzugsweise wird als Kunststoff hierbei Polyethylen vorgesehen. Besonders bevorzugt ist die Auskleidung der Wandung der ersten und zweiten Ausnehmungen als ein Hohlzylinder ausgebildet, welcher außen von einer Lage aus im Vergleich zu dem Material des Hohlzylinders festeren Material umschlossen ist, beispielsweise von einer Lage aus glasfaserverstärktem Kunststoff. Dies verbessert die Aufnahme der Druckkräfte durch die Vorsprünge.

Gemäß einer weiteren bevorzugten Ausführungsform des erfindungsgemäßen Hinterkastens sind die Vorsprünge als Laschen ausgebildet, und weisen vorzugsweise ein Gelege aus zwei oder mehr Faserverbundwerkstoffschichten auf. Je nach Dimensionierung des Rotorblatts und je nach Größe der zu erwartenden angreifenden Windkräfte müssen die Vorsprünge unterschiedlichen Zug- und Druckbelastungen standhalten. Der Dimensionierung des Rotorblatts und des Hinterkastens kann durch entsprechende Dicke der Gelege Rechnung getragen werden.

Weiterhin weisen die Vorsprünge vorzugsweise einen von dem Gelege umschlossenen Schaumkörper auf. Der Schaumkeil ist gemäß einer ersten bevorzugten Alternative aus einem elastischen Schaumstoff ausgebildet. Dies hat den Vorteil, dass etwaige auf die als Laschen ausgebildeten Vorsprünge einwirkende Druckkräfte gedämpft werden können. Gemäß einer zweiten Alternative ist der Schaumkeil aus einem nicht elastischem, insbesondere ausgehärteten, Schaumstoff ausgebildet. Dies hat den Vorteil, dass die Steifigkeit der als Laschen ausgebildeten Vorsprünge weiter gesteigert wird.

Besonders bevorzugt weist das Fußsegment zur formschlüssigen Koppelung eine oder mehrere Schienen auf, und das Kopfsegment oder die Kopfsegmente weisen eine oder mehrere korrespondierende Schienen auf, wobei die Schienen miteinander in Eingriff bringbar sind, vorzugsweise mittels Aufschieben. Es hat sich herausgestellt, dass die Verwendung eines Schienensystems, welches das Herstellen einer formschlüssigen Verbindung durch Aufschieben vorsieht, einen besonders guten Kompromiss aus Positioniergenauigkeit und Handhabbarkeit darstellen, was diese Art der formschlüssigen Koppelung zwischen Fußsegment und Kopfsegment am Aufstellort einer Windenergleanlage begünstigt.

In einer vorteilhaften Weiterbildung weist eine jeweilige Schiene an dem Fußsegment oder die mit ihr korrespondierende Schiene des zugeordneten Kopfsegments ein Schwalbenschwanzprofil auf. Solche Formschlussverbindungen mit Schwalbenschwanzprofilen und korrespondierend ausgebildeten Ausnehmungen mit Hintergriff gewährleisten eine hohe Positioniergenauigkeit. Optional ist die Anordnung einer jeweils einzelnen Schiene mit korrespondierendem Teil für Kopf- und Fußsegment möglich, oder die parallele Anordnung jeweils mehrerer Schienen möglich.

Gemäß einer besonders bevorzugten Alternative ist die Schiene oder sind die Schienen des Fußsegments und die korrespondierende Schiene oder Schienen des oder der Kopfsegmente identisch ausgebildet. Vorzugsweise weisen diese einen im Wesentlichen L-förmigen Querschnitt auf. Dies ermöglicht es, mit einem einzigen Werkzeug hergestellte identische Schienenelemente sowohl auf Seiten des Fußsegments als auch korrespondierend auf Seiten des oder der Kopfsegmente anzuordnen, die miteinander in Eingriff bringbar sind. Bei einer Verwendung solcher identisch ausgebildeter Schienenelemente ist es insbesondere bevorzugt, dem Fußsegment für jedes Kopfsegment zwei Schienen zuzuordnen, und dem jeweiligen Kopfsegment jeweils zwei korrespondierende Schienen zuzuordnen. Die Schienen sind vorzugsweise parallel zueinander ausgerichtet.

Gemäß einer weiteren bevorzugten Ausführungsform der Erfindung sind dem Fußsegment mindestens zwei, vorzugsweise drei oder vier Kopfsegmente zugeordnet.

Gemäß einer bevorzugten Ausführungsform sind dem Fußsegment ein oder mehrere Kopfsegmente mit einer jeweiligen Länge von 3m oder weniger zugeordnet. Für die bevorzugte Ausführungsform mit mehreren Kopfsegmenten ergibt sich hierbei folgender Vorteil, erläutert am Beispiel mit drei Kopfsegmenten pro Fußsegment: Bei jeweils gleicher Länge (in Längsrichtung) der Kopfsegmente sind das quer zur Längsrichtung größte Kopfsegment und das quer zur Längsrichtung kleinste Kopfsegment ineinander stapelbar. Auf diese Weise ist es möglich, jeweils diese beiden Kopfsegmente ineinander verschachtelt innen auf eine Seite eines geschlossenen 40' - Containers zu verladen, und das übrige, mittlere Kopfsegment auf die andere Seite des Containers zu verladen. Somit sind vorzugsweise drei der wie vorstehend angeordneten Gruppen von Kopfsegmenten in Längsrichtung hintereinander in dem 40'.Container anordenbar. Es können hierdurch vorteilhaft alle für eine Windenergieanlage mit drei Rotorblättern benötigten Kopfsegmente in einer kompakten Anordnung transportiert werden. Dieser Vorteil ergibt sich analog auch für andere Längsteilungen und andere Zuordnungen von Kopfsegment pro Fußsegment.

Vorzugsweise sind dem Fußsegment für jedes Kopfsegment zwei parallel geführte Schienen zugeordnet, und jedes Kopfsegment weist zwei korrespondierende, parallel geführte Schienen zum Ineingriffbringen mit den Schienen des Fußsegments auf.

Der Hinterkasten ist vorzugsweise dadurch weitergebildet, dass an der Verbindungsseite die druckseitige Fläche und die saugseitige Fläche jeweils durch eine Kante begrenzt sind, deren jeweiliger Kantenverlauf an die Kontur der Verbindungsfläche eines Rotorblatts angepasst ist. Hierdurch schmiegt sich der Hinterkasten optimal und nahtlos an das Rotorblatt an.

In einer bevorzugten Weiterbildung der Erfindung sind im inneren des Hinterkastens ein oder mehrere Bereiche zum Auftrag von Haftmitteln, vorzugsweise Klebstoff wie etwa eine hochfeste Epoxidharzverbindung, vorbereitet. Das ermöglicht das Ankleben des Hinterkastens an der Verbindungsfläche des Rotorblatts. Optional oder alternativ sind die Bereiche der Kanten auf der Verbindungsseite des Hinterkastens zum Auftragen der Haftmittelvorbereitet. Durch das Ankleben des Hinterkastens an das Rotorblatt wird im Vergleich zu dem Verschrauben oder Vernieten bei konventionellen Rotorblättern eine signifikante Kosteneinsparung erzielt. Die Kosteneinsparung resultiert insbesondere daraus, dass einerseits die erheblichen Materialkosten für Schrauben, Muttern, Nieten etc. eingespart werden können und andererseits die Einbringung von Verstärkungselementen nur noch vermindert wenn überhaupt erfolgen muss. Bei konventionellen Verbindungsarten musste eine Vielzahl von Bohrungen vorgesehen werden, welche jede für sich eine Strukturschwächung bedeuteten, die mittels Bewehrungen, zusätzlichen Verstrebungen etc. ausgeglichen werden mussten. Dies kann nunmehr entfallen.

Das Verkleben des Hinterkastens mit dem Rotorblatt wird mit zufriedenstellender Genauigkeit erst durch die Unterteilbarkeit gemäß der vorliegenden Erfindung ermöglicht, weil nicht mehr der gesamte Hinterkasten am Aufstellort montiert werden muss. Zudem entfällt das Transportieren des erforderlichen apparativen Aufwands zum Herstellen einer präzisen und ausreichend haltbaren Klebeverbindung,

Bevorzugt weisen das Fußsegment und/oder das oder die Kopfsegmente im Bereich der Unterteilung jeweils einen Steg auf, der sich von der druckseitigen Fläche zu der saugseitigen Fläche erstreckt, wobei die Schiene oder Schienen jeweils auf den Stegen angeordnet sind. Somit dienen die Stege einerseits zum Abschluss der Innenflächen des Fußsegments und der Kopfsegmente, wahlweise vollständig verschlossen oder teilweise geöffnet, und nehmen zudem eine stabilisierende Funktion ein. Die Schienen lassen sich auf den Stegen vormontieren, so dass am Aufstellort tatsächlich nur noch das reine Aufschieben bzw. Koppeln des oder der Kopfsegmente an das Fußsegment vorgenommen werden muss.

Gemäß einer weiteren bevorzugten Ausführungsform weist der Hinterkasten Arretiermittel auf, die zum wahlweisen Sperren oder Freigeben der Relativposition zwischen dem Fußelement und dem mindestens einen Kopfsegment in gekoppeltem Zustand vorgesehen sind. Die Arretiermittel sind vorzugsweise als Bolzenverbindung ausgebildet, besonders bevorzugt als Scherbolzenverbindung. Bei jenen Ausführungsformen der Erfindung, die mehrere Kopfsegmente aufweisen, wird vorzugsweise nur das der Rotorblattwurzel am nächsten gelegene Kopfsegment arretiert. Dadurch, dass die Kopfsegmente sich vorzugsweise gegeneinander abstützen, dient das arretierte, der Rotorblattwurzel am nächsten gelegene Kopfsegment gleichzeitig der Arretierung der übrigen Kopfsegmente.

Die Erfindung löst die ihr zugrunde liegende Aufgabe bei einem Rotorblatt der eingangs genannten Art, indem an dem Rotorblatt ein Fußsegment eines Hinterkastens nach einer der weiter oben beschriebenen bevorzugten Ausführungsformen angebracht ist.

Die Erfindung löst die ihr zugrunde liegende Aufgabe zudem durch ein Rotorblatt der vorstehend genannten Art, bei dem das Fußsegment mit einem oder mehreren Kopfsegmenten derart gekoppelt ist, dass ein Hinterkasten nach einer der weiter oben beschriebenen bevorzugten Ausführungsformen an dem Rotorblatt ausgebildet ist.

Die Erfindung löst die ihr zugrunde liegende Aufgabe zudem bei einer Windenergieanlage mit einem Turm, einer Gondel, einem Rotor und mindestens einem mit dem Rotor verbundenen Rotorblatt, indem das Rotorblatt nach einer der vorstehend beschriebenen bevorzugten Ausführungsformen der Erfindung ausgebildet ist.

Die Erfindung wird im Folgenden anhand bevorzugter Ausführungsbeispiele und unter Bezugnahme auf die beigefügten Figuren näher beschrieben. Hierbei zeigen
- Figur 1: eine Windenergieanlage gemäß der vorliegenden Erfindung,
- Figur 2: einen Abschnitt eines Rotorblatts gemäß der vorliegenden Erfindung gemäß einem ersten Ausführungsbeispiel in einem ersten Montagezustand,
- Figur 3: den Abschnitt des Rotorblatts aus Figur 2 in einer zweiten Montagestellung,
- Figur 4: den Abschnitt des Rotorblatts aus den Figuren 2 und 3 in einer dritten Montagestellung,
- Figur 5: einen Abschnitt des Rotorblatts aus den Figuren 2 bis 4 in einer vierten Montagestellung,
- Figur 6: einen Hinterkasten für ein Rotorblatt gemäß einem zweiten Ausführungsbeispiel der Erfindung in einer ersten Montagestellung,
- Figur 7: den Hinterkasten aus Figur 6 in einer zweiten Montagestellung,
- Figur 8: den Hinterkasten in der Montagestellung gemäß Figur 7 in einer anderen Ausrichtung,
- Figur 9: ein Fußelement für einen Hinterkasten gemäß dem zweiten Ausführungsbeispiel der vorliegenden Erfindung,
- Figur 10: eine Detailansicht eines Fußsegments und eines Kopfsegments des erfindungsgemäßen Hinterkastens in entkoppeltem Zustand,
- Figur 11: eine Detailansicht eines Fußsegments und eines Kopfsegments für eine Hinterkasten gemäß der vorliegenden Erfindung in gekoppeltem Zustand,
- Figur 12: einen Abschnitt eines Rotorblatts gemäß der vorliegenden Erfindung mit einem Hinterkasten gemäß einem dritten Ausführungsbeispiel der Erfindung,
- Figur 13: eine Detailansicht des Hinterkastens gemäß Figur 12, und
- Figur 14: eine schematische Darstellung eines Teils des Hinterkastens gemäß den Figuren 12 und 13.

Wenngleich bestimmte Merkmale bevorzugter Ausführungsformen nur bezüglich einzelner Ausführungsbeispiele beschrieben sind, erstreckt sich die Erfindung auch auf die Kombination einzelner Merkmale der unterschiedlichen Ausführungsbeispiele untereinander.

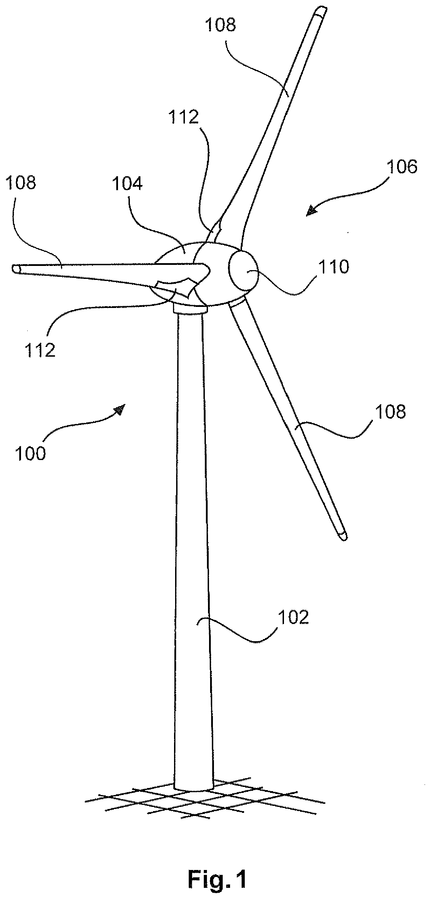

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen (nicht dargestellten) Generator in der Gondel 104 an.

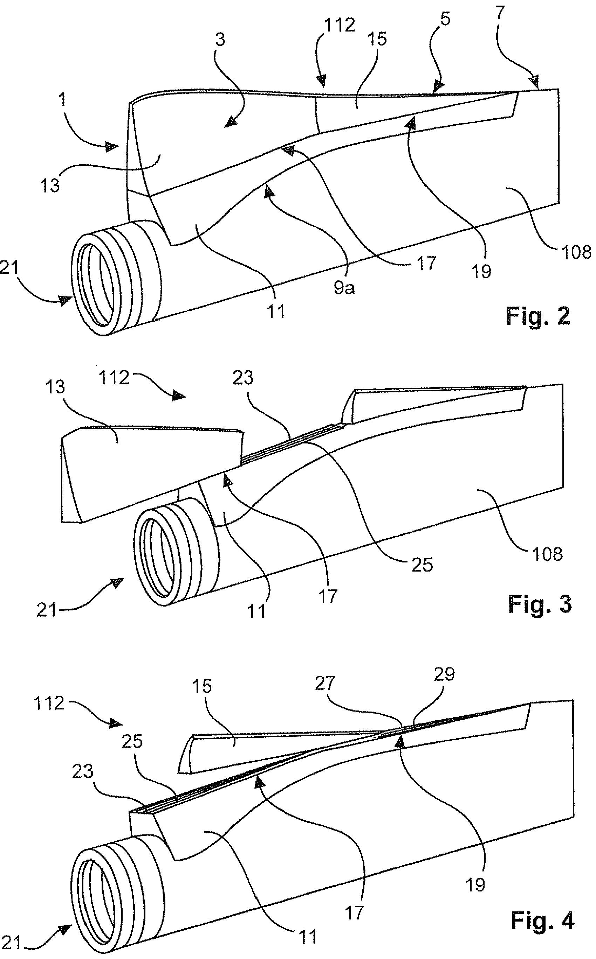

Die Rotorblätter 108 weisen jeweils einen Hinterkasten 112 auf, mittels dessen sie als anschmiegsame Rotorblätter ausgebildet sind. Der Hinterkasten ist in mehrere Segmente unterteilt, wie sich aus den nachfolgenden Figuren 2 bis 11 erkennen lässt.

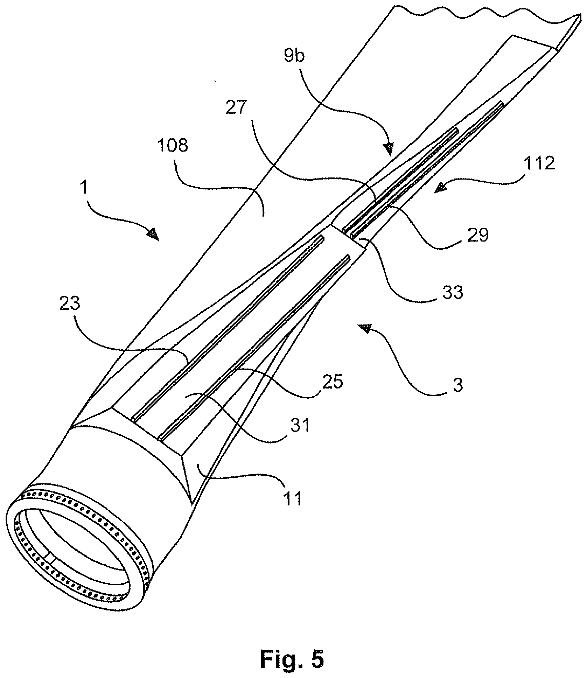

Ein Rotorblatt mit einem Hinterkasten gemäß einem ersten Ausführungsbeispiel der Erfindung ist in den Figuren 2 bis 5 dargestellt. Das in den Figuren 2 bis 5 dargestellte Rotorblatt 108 weist in einem sich an die Rotorblattwurzel 21 anschließenden Bereich den Hinterkasten 112 auf. Der Hinterkasten 112 weist eine saugseitige Fläche 1, eine druckseitige Fläche 3 und eine die druckseitige und die saugseitige Fläche 1, 3 trennende Hinterkante 5 auf. Gegenüber der Hinterkante 5 ist die Verbindungsseite des Hinterkastens 112 zu dem Rotorblatt 108 angeordnet. An der Verbindungsseite verläuft eine erste Kante 9a und eine zweite Kante 9b (siehe Figur 5), die die Fläche 1, 3 des Hinterkastens 112 begrenzt und an die Krümmung des Rotorblatts 108 angepasst ist. Die Hinterkante 5 des Hinterkastens 112 ist in montiertem Zustand auf die Hinterkante 7 des Rotorblatts 108 ausgerichtet und geht fließend in diese über.

Der Hinterkasten 112 weist ein Fußsegment 11 auf, welches die Verbindungsseite aufweist. Der Hinterkasten 112 ist unterteilt und weist gemäß dem Ausführungsbeispiel aus den Figuren 2 bis 5 ein erstes Kopfsegment 13 sowie ein zweites Kopfsegment 15 auf. Das erste Kopfsegment 13 und das zweite Kopfsegment 15 weisen jeweils einen Teil der Hinterkante 5 auf. Das Kopfsegment 13 ist in einer ersten Unterteilungsebene 17 mit dem Fußsegment 11 gekoppelt, während das zweite Kopfsegment 15 in einer zweiten Unterteilungsebene 19 mit dem Fußsegment 11 gekoppelt ist. Die erste und zweite Unterteilungsebene 17,19 sind zueinander leicht angewinkelt.

Wie sich aus den Figuren 2 bis 5 ergibt, sind im Bereich der Unterteilungsebenen 17, 19 Schienen zum formschlüssigen Koppeln des jeweiligen Kopfsegments mit dem Fußsegment ausgebildet. Auf der ersten Unterteilungsebene 17 sind zwei parallel geführte Schienen 23, 25 angeordnet, die zum Ineingriffbringen mit korrespondierend ausgebildeten Schienen (nicht dargestellt) in dem Kopfsegment 13 eingerichtet sind. Auf der zweiten Unterteilungsebene 19 sind zwei parallel geführte Schienen 27, 29 angeordnet, die zum Ineingriffbringen mit korrespondierenden (nicht dargestellten) Schienen in dem Kopfsegment 15 eingerichtet sind. Wie sich in Figur 5 erkennen lässt, sind die Schienen 27, 29 in der zweiten Unterteilungsebene 19 in einem engeren Abstand zueinander angeordnet als die Schienen 23, 25 in der ersten Unterteilungsebene 17. Hierdurch werden die zur Verfügung stehenden Platzverhältnisse ausgereizt, um für jedes der Kopfsegmente 13, 15 eine möglichst hohe Stabilität zu gewährleisten. Wie in Figur 5 ebenfalls zu erkennen ist, sind zum Befestigen der Schienen 23, 25 bzw. 27, 29 in den Unterteilungsebenen jeweils Stege 31, 33 ausgebildet, die das Fußsegment 11 zumindest teilweise und im gezeigten Ausführungsbeispiel vollständig verschließen.

Die Betrachtung der Figuren 2 bis 5 gibt auch Auskunft über die erfolgende Montage bzw. Demontage der Kopfsegmente des Hinterkastens 112 von dem Rotorblatt 108. Bei Übergang von dem Zustand gemäß Figur 2 zu den Zustand gemäß Figur 3 wird zunächst das der Rotorblattwurzel 21 am nächsten gelegene Kopfsegment 13 von dem Fußsegment 11 entkoppelt, indem das Kopfsegment 13 entlang der Schienen 23, 25 nach erfolgter (nicht dargestellter) Entriegelung abgeschoben wird. Anschließend wird, wie in Figur 4 gezeigt ist, das zweite Kopfsegment 15 entlang der zweiten Unterteilungsebene 19 und den Schienen 27, 29 von dem Fußsegment 11 abgeschoben. Figur 5 zeigt schließlich das Fußsegment 11 des Hinterkastens 112 an dem Rotorblatt 108 mit demontierten (oder noch nicht montierten) Kopfsegmenten 13, 15. Zum Montieren der Kopfsegmente, beispielsweise am Aufstellort der Windenergieanlage, wird in analoger Weise umgekehrt verfahren, und zunächst das Kopfsegment 15 aufgeschoben. Im Anschluss daran wird Kopfsegment 13 aufgeschoben und optional gesichert.

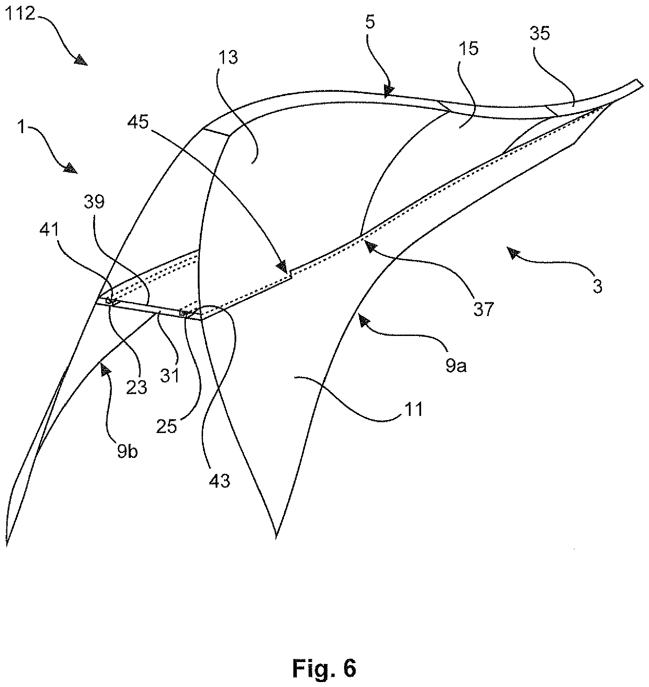

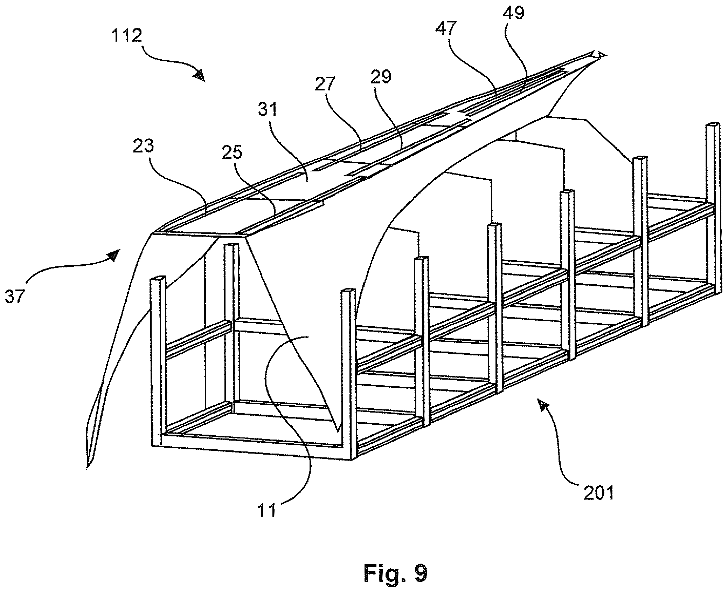

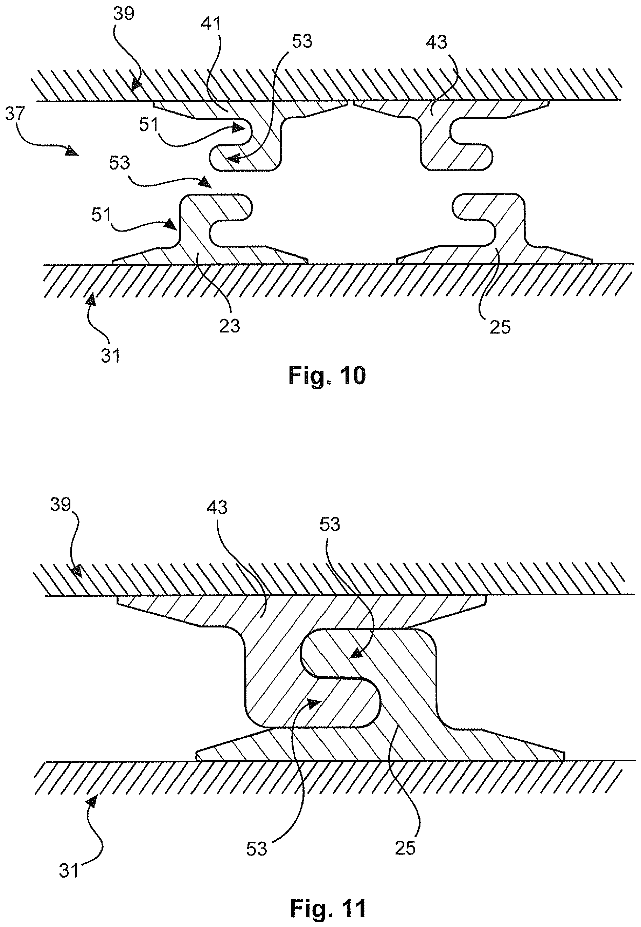

Die Figuren 6 bis 9 zeigen einen Hinterkasten 112 für ein Rotorblatt 108 gemäß einem zweiten Ausführungsbeispiel der vorliegenden Erfindung. Der Hinterkasten 112 gemäß den Figuren 6 bis 9 ist im Wesentlichen so ausgestaltet wie der Hinterkasten 112 gemäß den Figuren 2 bis 5. Auf wesentliche Unterschiedsmerkmale wird nachfolgend eingegangen. Das Fußsegment 11 des Hinterkastens 112 gemäß den Figuren 6 bis 9 weist eine einzelne, durchgehende Unterteilungsebene 37 auf. Dieser Unterteilungsebene sind insgesamt drei Kopfsegmente 13, 15, 35 zugeordnet. Die Kopfsegmente 13, 15, 35 weisen jeweils einen Teil der Hinterkante 5 des Hinterkastens 112 auf. Die Unterteilungsebene 37 erstreckt sich wie auch zuvor bei dem Ausführungsbeispiel der Figuren 2 bis 5 für die dortigen Unterteilungsebenen 17, 19 gilt, von der Saugseite 1 zur Druckseite 3. Der Hinterkasten 112 gemäß Figuren 6 bis 9 ist ohne Endabdeckung dargestellt, was einen Blick auf das Innere des Hinterkastens erlaubt. Das Fußsegment 11 weist einen im Wesentlichen durchgehenden Steg 31 auf, auf welchem eine Mehrzahl jeweils paarweise parallel geführter Schienen angeordnet ist (siehe Figur 9). Die Kopfsegmente 13, 15, 35 weisen jeweils einen Steg auf, dargestellt ist in Bezug auf das erste Kopfsegment Steg 39, auf denen jeweils auf der dem Fußsegment 11 zugewandten Seite jeweils ein Paar Schienen 41, 43 angeordnet ist. Die Schienen 23, 25 sind mit den jeweils korrespondierenden Schienen 41, 43 für das erste Kopfsegment 13 in der Stellung gemäß Figur 6 gekoppelt und befinden sich formschlüssig in Eingriff. Siehe hierzu auch die Figuren 10 und 11. In Bezug auf die Kantenverläufe 9a, 9b auf der Verbindungsseite des Hinterkastens 112 wird auf die vorstehenden Erläuterungen zum ersten Ausführungsbeispiel verwiesen.

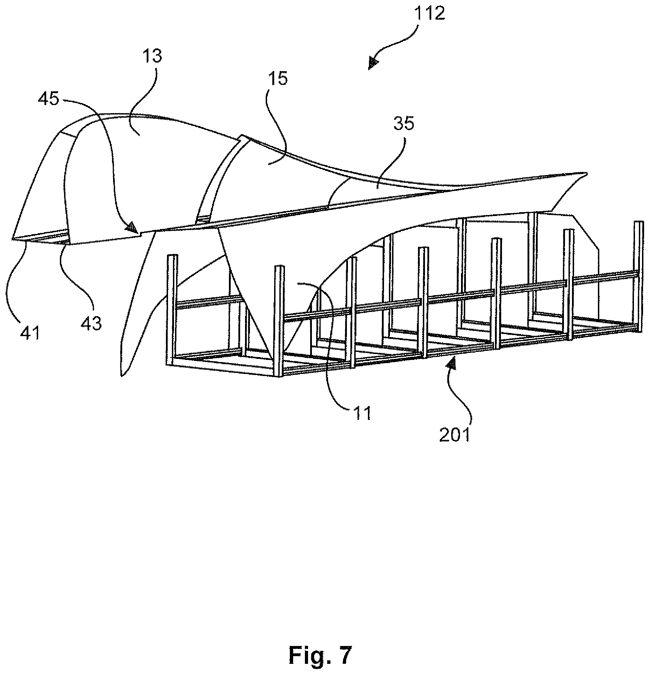

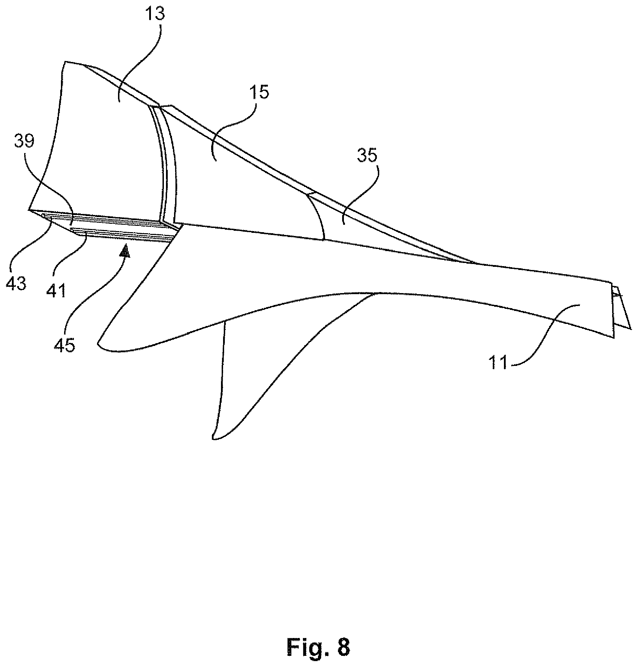

In den Figuren 7 und 9 ist der erfindungsgemäße Hinterkasten 112 gemäß dem zweiten Ausführungsbeispiel jeweils auf einem Gerüst 201 lagernd abgebildet. In Figur 8 ist das Gerüst 201 wie auch in Figur 6 weggelassen, was illustrativen Zwecken dient.

In Figur 7 ist gezeigt, wie die Kopfsegmente 13, 15 und 35 jeweils außer Eingriff mit den ihnen jeweils auf dem Fußsegment 11 zugeordneten Schienen gebracht sind (siehe auch Figur 9). In Bezug auf das erste Kopfsegment sind exemplarisch die Schienen 41, 43 angedeutet.

Eine ähnliche Montage- bzw. Demontagestellung ist auch in Figur 8 abgebildet, wo allerdings ein besserer Blick auf die Unterseite des Stegs 39 von Kopfsegment 13 ermöglicht ist, und die Schienen 41, 43 besser zu erkennen sind.

Wie sich aus den Figuren 6 und 7 erkennen lässt, weist das Kopfsegment 13 eine Stufe 45 auf der Druck- und Saugseite der Flächen des Hinterkastens 112 auf. Das Fußsegment 11 weist an derselben Stelle (bezogen auf den montierten Zustand des Kopfsegments 13 auf dem Fußsegment 11) eine korrespondierend ausgebildete Stufe auf. Die äußere Fläche des Kopfsegments 13 überlappt bis zu dem Bereich der Stufe 45 die darunterliegende Fläche des Fußsegments 11, um eine Abdichtung des Flächenübergangs zwischen Kopfsegment 13 und Fußsegment 11 zu gewährleisten. Die Stufe 45 ist an einem Punkt vorgesehen, an welchem die Breite des Kopfsegments 13 und korrespondierend dazu die Breite des Stegs 31 maximal ist. In dem Bereich zwischen der Stufe 45 und dem nabenseitigen Ende des Kopfsegments 13 überlappt die Fläche des Kopfsegments 13 in montiertem Zustand die Fläche des Fußsegments 11, während in dem Bereich zwischen der Stufe 45 und dem benachbarten Kopfsegment 15 die Fläche des Fußsegments 11 die Fläche des Kopfsegments 13 überlappt. Hierdurch wird verhindert, dass beim Montieren oder Demontieren des Kopfsegments 13 eine Beschädigung der Unterkante des Kopfsegments auftritt.

In Figur 9 ist zu erkennen, dass der Steg 31 in der Unterteilungsebene 37 aus mehreren Segmenten zusammengesetzt ist. Jeweils mindestens eins dieser Segmente überspannend sind jeweils paarweise insgesamt sechs Schienen auf dem Fußsegment 11 des Hinterkastens 112 angeordnet. Die Schienen 23, 25 sind korrespondierenden Schienen des ersten Kopfsegments 13 zugeordnet (siehe Figuren 6 bis 8). Die Schienen 27, 29, welche in geringerem Abstand zueinander angeordnet sind als die Schienen 23, 25, sind korrespondierenden Schienen des zweiten Kopfsegments 15 zugeordnet. Die Schienen 47, 49, welche in einem engeren Abstand zueinander als die Schienen 27, 29 angeordnet sind, sind korrespondierenden Schienen des Kopfsegments 35 zugeordnet. Die Abstände sind vorzugsweise derart gewählt, dass das Kopfsegment 35 mit dem Fußsegment 11 gekoppelt werden kann, ohne mit den Schienen 27, 29 sowie 23, 25 in Kontakt zu gelangen, und vorzugsweise weiterhin so, dass das Kopfsegment 15 mit dem Fußsegment 11 gekoppelt werden kann, ohne mit den Schienen 23, 25 in Berührung zu gelangen.

Die Figuren 10 und 11 zeigen die Anordnung der Schienen auf dem Fußsegment und einem korrespondierenden Kopfsegment gemäß einem bevorzugten Ausführungsbeispiel. Gemäß diesem Ausführungsbeispiel sind die Schienen allesamt identisch ausgebildet. Ein formschlüssiges Ineingriffbringen, welches eine Aufnahme der Querkräfte in alle Richtungen ermöglicht, wird allein durch spiegelverkehrte Anordnung der Schienen erreicht. Dargestellt ist im Einzelnen ein Querschnitt durch eine Hinterkasten 112 gemäß dem zweiten Ausführungsbeispiel. Gleichwohl ist die Anordnung der korrespondierenden und identisch ausgebildeten Schienen analog auch für das erste Ausführungsbeispiel zu übernehmen. Auf dem Steg 31 des Fußsegments 11 (nicht dargestellt) sind die Schienen 23, 25 angeordnet. Die Schienen weisen jeweils einen sich rechtwinklig von dem Steg aus erstreckenden Abschnitt 51 und einen im Wesentlichen parallel zu dem Steg 31 ausgerichteten Abschnitt 53 auf. Hierdurch ist ein im Wesentlichen L-förmiges Profil ausgebildet. Die parallel zu dem Steg 31 ausgerichteten Abschnitte 53 weisen aufeinander zu. Auf dem Steg 39 des ersten Kopfsegments 13 (nicht dargestellt) sind zwei korrespondierende Schienen 41, 43 angeordnet. Im Unterschied zu den auf dem Steg 31 des Fußsegments angeordneten Schienen 23, 25 weisen die zu dem Steg 39 parallel ausgerichteten Abschnitte 53 voneinander fort. In Figur 10 sind die Schienen außer Eingriff dargestellt.

Figur 11 verdeutlicht mit einer einfachen Prinzipskizze für eines der beiden in Figur 10 dargestellten Schienenpaare die in Eingriff befindliche Situation. Die waagerechten Abschnitte 53 der Schiene 25 und der Schiene 43 hintergreifen einander, wodurch die zu den beiden Stegen 31, 39 senkrechte Kraftkomponente jeweils aufgenommen wird. Die zu den Stegen 31, 39 parallele Kraftkomponente wird in jeweils einer Richtung von Schiene 25 und 41 aufgenommen und in der anderen Richtung von Schiene 23 und 43.

Alternative Formgestaltungen zu dem L-förmigen Profil der Schienen liegen beispielsweise in einem C-förmigen Profil. Alternativ zu der gezeigten Verwendung von identischen Schienen ist nach wie vor die Ausbildung eines schwalbenschwanz- oder trapezförmigen Profils mit einem männlichen Part und einem weiblichen Gegenpart bevorzugt. Letzteres ermöglicht auch die Verwendung eines Einschienensystems, also lediglich einer Schiene pro Kopfsegment oder sogar einer durchgehenden Schiene auf dem Fußsegment und jeweils mit dieser korrespondierenden Schiene an dem einen oder den mehreren Kopfsegmenten.

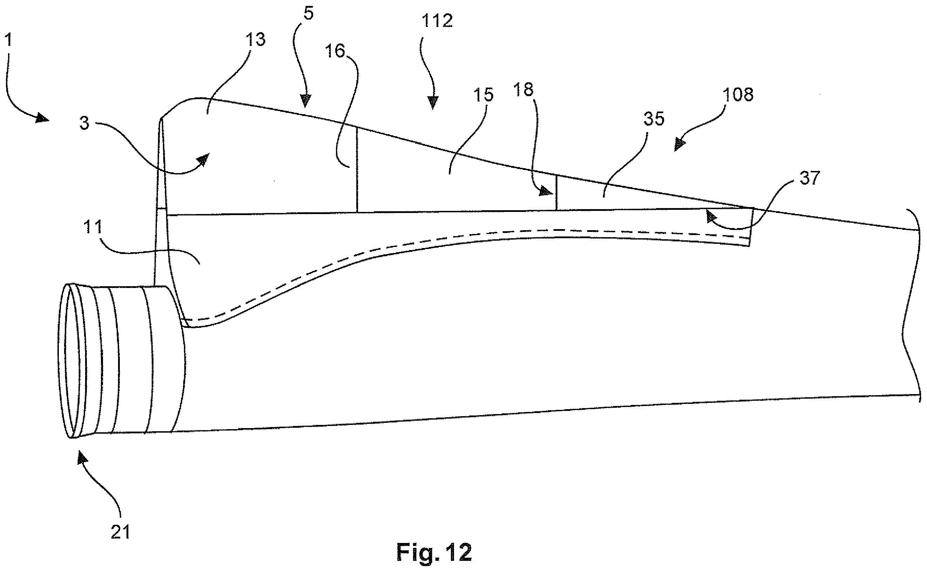

In Figur 12 ist ein Rotorblatt 108 mit einem Hinterkasten 112 gemäß einem dritten Ausführungsbeispiel dargestellt. Das Rotorblatt 108 und der Hinterkasten 112 weisen strukturelle Ähnlichkeiten mit dem ersten und zweiten Ausführungsbeispiel der vorliegenden Erfindung auf. Bezüglich gleicher Bezugszeichen wird insofern auf die vorstehenden Ausführungen verwiesen. Der Hinterkasten 112 des Rotorblatts 108 aus Figur 12 weist ein einzelnes Fußsegment 11 auf, welches entlang einer durchgehenden Unterteifungsebene 37 mit mehreren, in diesem Fall drei, Kopfsegmenten 13, 15, 35 gekoppelt ist. Die Kopfsegmente 13, 15, 35 sind benachbart zueinander angeordnet und liegen an Unterteilungsebenen 16, 18 aneinander an. Auf diese Weise wird die durchgehende Hinterkante 5 zwischen der Saugseite und Druckseite 1,3 des Hinterkastens 112 gebildet.

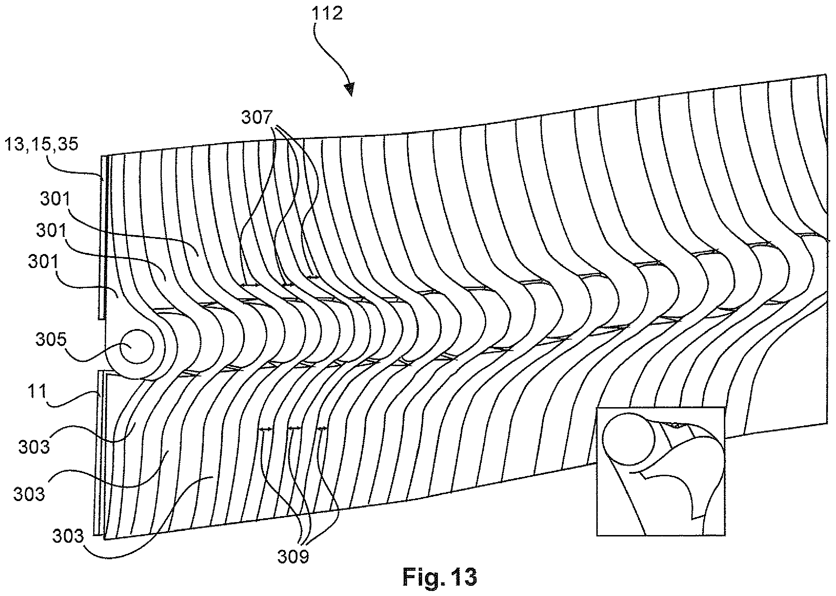

Die Art der formschlüssigen Koppelung der Kopfsegmente mit dem Fußsegment gemäß Figur 12 ist in Figur 13 verdeutlicht. Wie sich aus der in Figur 13 unten rechts dargestellten Übersicht ergibt, ist eine scharnierartige Koppelung an der Innenseite des Hinterkastens 112 vorgesehen. Das Fußsegment 11 weist eine Vielzahl von Vorsprüngen 303 auf, die jeweils eine erste Ausnehmung aufweisen. Das Kopfsegment 13 bzw. die Kopfsegmente 13, 15, 35 weisen eine Vielzahl zweiter Vorsprünge 301 auf, die jeweils eine zweite Ausnehmung aufweisen. Die ersten Vorsprünge 303 des Fußsegments 11 sind in einem Abstand 309 jeweils zueinander beabstandet. Die Abstände 309 sind jeweils an die Breite der zweiten Vorsprünge 301 des bzw. der Kopfsegmente 13, 15, 35 angepasst. Hieraus ist zu folgern, dass die Abstände nicht alle gleich sein müssen, sondern sich jeweils zueinander voneinander unterscheiden können, solange sie entsprechend der gegenüberliegenden, korrespondierenden Vorsprünge 301 dimensioniert sind. Die zweiten Vorsprünge 301 des bzw. der Kopfsegmente 13, 15, 35 sind jeweils in einem Abstand 307 zueinander beabstandet, für welchen das Gleiche gilt wie für den Abstand 309 bezüglich der Vorsprünge 303 des Fußsegments 11.

Um eine formschlüssige Koppelung zwischen dem Fußsegment 11 und dem bzw. den Kopfsegmenten 13, 15, 35 zu erreichen, werden die Vorsprünge 301, 303 fluchtend aufeinander ausgerichtet. Sobald die Ausrichtung erfolgt ist, wird ein länglicher Körper 305, welcher im Prinzip die Stange eines Scharniers bildet, in die ersten und zweiten Ausführungen eingeführt, bis er sich durch vorzugsweise sämtliche ersten und zweiten Ausnehmungen hindurch erstreckt. In jenem Ausführungsbeispiel, in weichem die Ausnehmungen nicht streng koaxial sind, sondern einer gekrümmten Bahn folgen, die beispielsweise der Kontur des Rotorblatts entspricht, wird das Einführen des länglichen Körpers 305 in die ersten und zweiten Ausnehmungen durch eine ausreichende Elastizität des länglichen Körpers gewährleistet.

Die Vorsprünge 301, 303, die als Laschen ausgebildet sind, werden vorzugsweise an die Innenseite der Ränder des Fußsegments 11 bzw. der Kopfsegmente 13, 15, 35 befestigt, insbesondere mittels Verkleben.

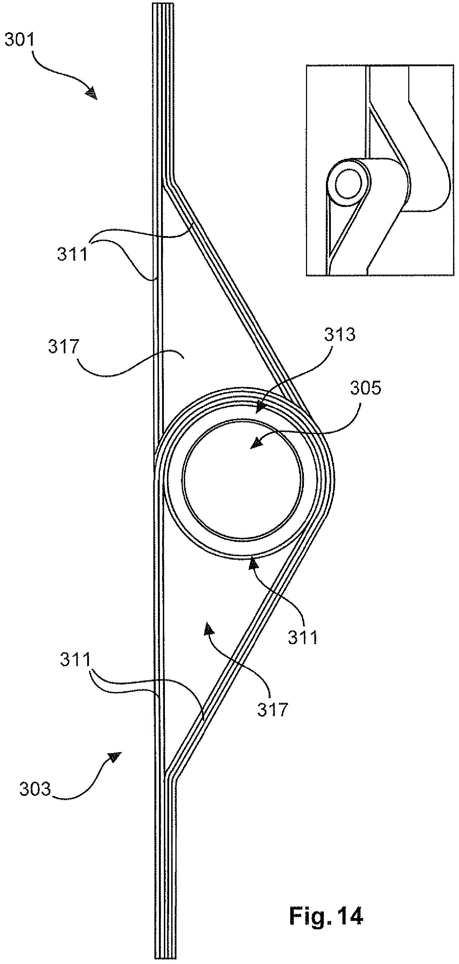

Die Anordnung und genaue Ausgestaltung der Vorsprünge ist in Figur 14 schematisch dargestellt. Figur 14 zeigt eine schematische Draufsicht, wie aus der rechts oben in Figur 14 befindlichen Übersicht deutlich wird, des Kopplungszustandes zwischen zwei benachbarten Vorsprüngen 301, 303. Der erste und zweite Vorsprung 303, 301 sind von einer außen liegenden Gelegeschicht 311 gebildet, die aus faserverstärktem Werkstoff, insbesondere glasfaserverstärktem Kunststoff, besteht. Die Menge der verwendeten Lagen hängt von der erwarteten Belastung der Laschen bzw. Vorsprünge ab. Im Inneren der Gelegeschichten 311 ist jeweils ein Keil 317 aus einem Schaumstoff angeordnet. An einem jeweiligen Ende der Vorsprünge 301, 303 ist ein Kopplungsbereich vorgesehen, in welchem eine bogenförmige Schlaufe des Geleges ausgebildet ist.

Innerhalb dieser Schlaufe ist gemäß Figur 14 jeweils eine hohe zylindrische Wandung aus Kunststoff angeordnet. Innerhalb dieser Wandung wird der längliche Körper 305 vorzugsweise spielfrei aufgenommen. Um die Aufnahme der Druckkräfte auf die Vorsprünge zu verbessern, ist die stoßdämpfende hohe zylindrische Wandung 313 von einer Schicht 315 aus faserverstärktem Werkstoff, vorzugsweise glasfaserverstärktem Kunststoff, umschlossen.

Ein besonderer Vorteil der formschlüssigen Koppelung gemäß den Figuren 12 bis 14 wird darin gesehen, dass die Kopplungsmittel, welche durch die Vorsprünge 301, 303 gebildet werden, unmittelbar an der Innenwandung auf der Saugseite oder Druckseite 1, 3 des Hinterkasten 112 bzw. des Rotorblatts 108 angeordnet werden können, ohne dass zum Koppeln separat Stege in das Innere des Hinterkastens 112 eingezogen werden müssen. Die Möglichkeit, zur zusätzlichen Versteifung weitere Querstreben und Stege vorzusehen, bleibt hierbei unbenommen. Die Kopplungsmittel sind auf der Innenseite des Hinterkastens vor Windangriff geschützt und beeinflussen das Strömungsprofil nicht. Zusätzlich ermöglichen sie eine einfache und schnelle Montage bei genauer Positionierung der Teile relativ zueinander.

## Patentansprüche

1. Windenergieanlagen-Hinterkasten (112) zum Montieren an einem sich an eine Rotorblattwurzel (21) eines Windenergieanlagen-Rotorblattes (108) anschließenden Bereichs, mit einer druckseitigen Fläche (3), einer saugseitigen Fläche (1), einer die druck- und saugseitigen Flächen trennenden Hinterkante (5), und einer der Hinterkante (5) gegenüberliegenden Verbindungsseite, welche zur Anbringung an einer korrespondierenden Verbindungsfläche des Rotorblattes (108) angepasst ist, wobei der Windenergieanlagen-Hinterkasten (112) in ein die Verbindungsseite aufweisendes Fußsegment (11) und ein oder mehrere die Hinterkante (5) aufweisende, mit dem Fußsegment (11) formschlüssig koppelbare Kopfsegmente (13, 15, 35) unterteilt ist,
**dadurch gekennzeichnet, dass** das Fußsegment zur formschlüssigen Koppelung eine Vielzahl zueinander beabstandeter Vorsprünge (303) mit einer ersten Ausnehmung aufweist, und dass das Kopfsegment oder die Kopfsegmente jeweils eine Vielzahl zueinander beabstandeter Vorsprünge (301) mit einer zweiten Ausnehmung aufweist, wobei die Vorsprünge des Fußsegments mit den Vorsprüngen des oder der Kopfsegmente fluchtend zueinander ausrichtbar sind, und ein länglicher Körper (305) vorgesehen ist, dessen Querschnitt dem Querschnitt der ersten und zweiten Ausnehmungen angepasst ist, und welcher in die Vielzahl erster und zweiter Ausnehmungen einführbar ist, wenn diese im Wesentlichen fluchtend zueinander ausgerichtet sind,
oder dass dem Fußsegment (11) für jedes Kopfsegment (13, 15, 35) zwei parallel geführte Schienen (23, 25) zugeordnet sind, und jedes Kopfsegment (13, 15, 35) zwei korrespondierende, parallel geführte Schienen (41, 43) zum Ineingriffbringen mit den Schienen des Fußsegments (11) aufweist.

2. Windenergieanlagen-Hinterkasten (112) nach Anspruch 1,
**dadurch gekennzeichnet, dass** das Fußsegment (11) für jedes Kopfsegment (13, 15) eine separate Unterteilungsebene (17,19) aufweist, in welcher das oder die Kopfsegmente (13, 15, 35) mit dem Fußsegment (11) koppelbar sind, oder dass das Fußsegment (11) für mehrere oder sämtliche Kopfsegmente (13, 15, 35) eine durchgehende Unterteilungsebene (37) aufweist, in welcher die jeweiligen Kopfsegmente (13, 15, 35) mit dem Fußsegment (11) koppelbar sind.

3. Windenergieanlagen-Hinterkasten (112) nach einem der vorstehenden Ansprüche,
**dadurch gekennzeichnet, dass** die eine oder mehreren Unterteilungsebenen (17,19,37) derart angeordnet sind, dass die maximale Profilbreite des Rotorblattes (108) in einem Bereich von 4m oder weniger liegt, wenn das Fußsegment (11) mit dem Rotorblatt (108) verbunden ist.

4. Windenergieanlagen-Hinterkasten nach Anspruch 1,
**dadurch gekennzeichnet, dass** die Vorsprünge des Fußsegments und des oder der Kopfsegmente entlang einer gekrümmten Bahn angeordnet sind, wobei vorzugsweise die Krümmung der Bahn dem Konturverlauf des Rotorblattes entspricht.

5. Windenergieanlagen-Hinterkasten nach einem der Ansprüche 1 bis 4,
**dadurch gekennzeichnet, dass** die Vorsprünge als Laschen ausgebildet sind, und vorzugsweise ein Gelege aus zwei oder mehr Faserverbundwerkstoffschichten aufweisen, wobei vorzugsweise die Vorsprünge jeweils einen von dem Gelege umschlossenen Schaumkörper aufweisen.

6. Windenergieanlagen-Hinterkasten (112) nach Anspruch 2,
**dadurch gekennzeichnet, dass** die Schienen miteinander in Eingriff bringbar sind, vorzugsweise mittels Aufschieben.

7. Windenergieanlagen-Hinterkasten (112) nach Anspruch 6,
**dadurch gekennzeichnet, dass** die Schienen (23, 25, 27, 29, 47, 49) an dem Fußsegment (11) oder die korrespondierende Schienen (41, 43,) des zugeordneten Kopfsegments (13, 15, 35) ein Schwalbenschwanzprofil aufweist, oder dass die Schienen (23, 25, 27, 29, 47, 49) des Fußsegments (11) und die korrespondierende Schienen (41, 43,) des oder der Kopfsegmente (13, 15, 25) identisch ausgebildet sind, vorzugsweise einen im Wesentlichen L-förmigen Querschnitt aufweisen.

8. Windenergieanlagen-Hinterkasten (112) nach einem der vorstehenden Ansprüche,
**dadurch gekennzeichnet, dass** dem Fußsegment (11) mindestens zwei, vorzugsweise drei oder vier, Kopfsegmente zugeordnet sind.

9. Windenergieanlagen-Hinterkasten (112) nach einem der vorstehenden Ansprüche,
**dadurch gekennzeichnet, dass** an der Verbindungsseite die druckseitige Fläche (3) und die saugseitige Fläche (1) jeweils durch eine Kante (9a, 9b) begrenzt sind, deren jeweiliger Kantenverlauf an die Kontur der Verbindungsfläche eines Rotorblatts (108) angepasst ist.

10. Windenergieanlagen-Hinterkasten (112) nach einem der vorstehenden Ansprüche,
**dadurch gekennzeichnet, dass** im Inneren des Hinterkastens (112) ein oder mehrere Bereiche zum Auftragen von Haftmitteln, vorzugsweise Klebstoff vorbereitet sind.

11. Windenergieanlagen-Hinterkasten (112) nach einem der vorstehenden Ansprüche,
**dadurch gekennzeichnet, dass** das Fußsegment (11) und/oder das oder die Kopfsegmente (13, 15, 35) im Bereich der Unterteilung jeweils einen Steg (31, 33, 39,) aufweisen, der sich von der druckseitigen Fläche (3) zu der saugseitigen Fläche (1) erstreckt, wobei die Schiene oder Schienen jeweils auf den Stegen angeordnet sind.

12. Windenergieanlagen-Hinterkasten (112) nach einem der vorstehenden Ansprüche,
**gekennzeichnet durch** Arretiermittel, die zum wahlweisen Sperren oder Freigeben der Relativposition zwischen dem Fußelement (11) und dem mindestens einen Kopfsegment in gekoppeltem Zustand vorgesehen sind, vorzugsweise als Bolzenverbindung.

13. Windenergieanlagen-Rotorblatt (108), mit einem tragenden Teil, einer von dem tragenden Teil umfassten Rotorblattwurzel (21) zur Anbringung an einem Rotor (106) der Windenergieanlage (100), einer druckseitigen Blattfläche, einer saugseitigen Blattfläche, und einer die druck- und die saugseitige Fläche trennenden Hinterkante (7),
**dadurch gekennzeichnet, dass** an einer Verbindungsfläche im Bereich der Rotorblattwurzel (21) des Rotorblattes (108) ein Fußsegment (11) mit der Verbindungsseite eines Hinterkastens (112) nach einem der Ansprüche 1 bis 12 montiert, wobei vorzugsweise das Fußsegment (11) mit einem oder mehreren Kopfsegmenten (13, 15, 35) derart gekoppelt ist, dass ein Hinterkasten nach einem der Ansprüche 1 bis 12 an dem Rotorblatt (108) ausgebildet ist.

14. Windenergieanlage (100), mit einem Turm (102), einer Gondel (104), einem Rotor (106),
**gekennzeichnet durch** mindestens ein mit dem Rotor (106) verbundenes Windenergieanlagen-Rotorblatt (108) nach Anspruch 13.

## Claims

1. A wind power installation rear box section (112) for mounting to a region adjoining to a rotor blade root (21) of a wind power installation rotor blade (108), comprising
a pressure-side surface (3), a suction-side surface (1), a trailing edge (5) separating the pressure-side and suction-side surfaces, and a connecting side which is opposite to the trailing edge (5) and which is adapted for mounting to a corresponding connecting surface of the rotor blade (108),
wherein the wind power installation rear box section (112) is sub-divided into a foot segment (11) having the connecting side and one or more head segments (13, 15, 35) which have the trailing edge (5) and which can be coupled in positively locking relationship to the foot segment (11),
**characterised in that** the foot segment for the positively locking coupling has a plurality of mutually spaced projections (303) with a first recess and the head segment or segments respectively have a plurality of mutually spaced projections (301) with a second recess, wherein the projections of the foot segment can be oriented with the projections of the head segment or segments in mutually aligned relationship, and there is provided an elongate body (305) whose cross-section is adapted to the cross-section of the first and second recesses and which can be introduced into the plurality of first and second recesses when they are oriented in substantially mutually aligned relationship,
or two rails (23, 25) arranged in parallel are associated with the foot segment (11) for each head segment (13, 15, 35) and each head segment (13, 15, 35) has two corresponding rails (41, 43) arranged in parallel for interengagement with the rails of the foot segment (11).

2. A wind power installation rear box section (112) according to claim 1
**characterised in that** the foot segment (11) has for each head segment (13, 15) a separate sub-division plane (17,19) in which the head segment or segments (13, 15, 35) can be coupled to the foot segment (11), or the foot segment (11) has for a plurality of or all head segments (13, 15, 35) a continuous sub-division plane (37) in which the respective head segments (13, 15, 35) can be coupled to the foot segment (11).

3. A wind power installation rear box section (112) according to one of the preceding claims
**characterised in that** the one or more sub-division planes (17, 19, 37) are so arranged that the maximum profile width of the rotor blade (108) is in a region of 4 m or less when the foot segment (11) is connected to the rotor blade (108).

4. A wind power installation rear box section according to claim 1
**characterised in that** the projections of the foot segment and of the head segment or segments are arranged along a curved path, wherein preferably the curvature of the path corresponds to the contour configuration of the rotor blade.

5. A wind power installation rear box section according one of claims to 4
**characterised in that** the projections are in the form of straps and preferably have a fabric comprising two or more fibre composite material layers, wherein preferably the projections each have a foam body enclosed by the fabric.

6. A wind power installation rear box section (112) according to claim 2
**characterised in that** the rails can be brought into engagement with each other, preferably by being pushed on.

7. A wind power installation rear box section (112) according to claim 15
**characterised in that** the rails (23, 25, 27, 29, 47, 49) on the foot segment (11) or the corresponding rails (41, 43) of the associated head segment (13, 15, 35) have a dovetail profile, or the rails (23, 25, 27, 29, 47, 49) of the foot segment (11) and the corresponding rails (41, 43) of the head segment or segments (13, 15, 35) are identical and are preferably of a substantially L-shaped cross-section.

8. A wind power installation rear box section (112) according to one of the preceding claims
**characterised in that** at least two, preferably three or four, head segments are associated with the foot segment (11).

9. A wind power installation rear box section (112) according to one of the preceding claims
**characterised in that** at the connecting side the pressure-side surface (3) and the suction-side surface (1) are respectively delimited by an edge (9a, 9b) whose respective edge configuration is adapted to the contour of the connecting surface of a rotor blade (108).

10. A wind power installation rear box section (112) according to one of the preceding claims
**characterised in that** one or more regions for the application of bonding agents, preferably adhesive, are prepared in the interior of the rear box section (112).

11. A wind power installation rear box section (112) according to one of the preceding claims
**characterised in that** the foot segment (11) and/or the head segment or segments (13, 15, 35) have in the region of the sub-division a respective leg (31, 33, 39) extending from the pressure-side surface (3) to the suction-side surface (1), wherein the rail or rails are respectively arranged on the legs.

12. A wind power installation rear box section (112) according to one of the preceding claims
**characterised by** arresting means which are provided for selectively locking or releasing the relative position between the foot segment (11) and the at least head segment in the coupled condition, preferably in the form of a bolt connection.

13. A wind power installation rotor blade (108) comprising a supporting portion, a rotor blade root (21) embraced by the supporting portion for mounting to a rotor (106) of the wind power installation (100), a pressure-side blade surface, a suction-side blade surface and a trailing edge (7) separating the pressure-side and the suction-side surfaces,
**characterised in that** mounted to a connecting surface in the region of the rotor blade root (21) of the rotor blade (108) is a foot segment (11) with the connecting side of a rear box section (112) according to one of claims 1 to 12, wherein preferably the foot segment (11) is coupled to one or more head segments (13, 15, 35) in such a way that a rear box section according to one of claims 1 to 12 is provided on the rotor blade (108).

14. A wind power installation (100) comprising a pylon (102), a pod (104) and a rotor (106),
**characterised by** at least one wind power installation rotor blade (108) according to claim 13 connected to the rotor (106).

## Revendications

1. Caisson arrière d'éolienne (112) à monter au niveau d'une zone se raccordant à une racine de pale de rotor (21) d'une pale de rotor d'éolienne (108), avec une surface côté pression (3), une surface côté aspiration (1), une arête arrière (5) séparant les surfaces côté pression et aspiration, et un côté de liaison opposé à l'arête arrière (5), lequel est adapté pour l'installation sur une surface de liaison correspondante de la pâle de rotor (108),
dans lequel le caisson arrière d'éolienne (112) est subdivisé en un segment de pied (11) présentant le côté de liaison et un ou plusieurs segments de tête (13, 15, 35) pouvant être couplés par complémentarité de forme au segment de pied (11), présentant l'arête arrière (5),
**caractérisé en ce que** le segment de pied présente pour le couplage par complémentarité de forme une pluralité de saillies (303) espacées les unes des autres avec un premier évidement, et que le segment de tête ou les segments de tête présente respectivement une pluralité de saillies (301) espacées les unes des autres avec un second évidement, dans lequel les saillies du segment de pied peuvent être orientées avec les saillies du ou des segments de tête les unes par rapport aux autres de manière alignée, et un corps allongé (305) est prévu, dont la coupe transversale est adaptée à la coupe transversale des premier et second évidements, et lequel peut être introduit dans la pluralité de premier et second évidements, lorsque ceux-ci sont orientés les uns par rapport aux autres de manière sensiblement alignée,
ou que deux rails (23, 25) guidés en parallèle sont associés au segment de pied (11) pour chaque segment de tête (13, 15, 35), et chaque segment de tête (13, 15, 35) présente deux rails (41, 43) correspondants, guidés en parallèle pour la mise en prise avec les rails du segment de pied (11).

2. Caisson arrière d'éolienne (112) selon la revendication 1,
**caractérisé en ce que** le segment de pied (11) présente pour chaque segment de tête (13, 15) un plan de subdivision séparé (17, 19), dans lequel le ou les segments de tête (13, 15, 35) peuvent être couplés avec le segment de pied (11), ou que le segment de pied (11) présente pour plusieurs ou tous les segments de tête (13, 15, 35) un plan de subdivision continu (37), dans lequel les segments de tête (13, 15, 35) respectifs peuvent être couplés avec le segment de pied (11).

3. Caisson arrière d'éolienne (112) selon l'une quelconque des revendications précédentes,
**caractérisé en ce que** les un ou plusieurs plans de subdivision (17, 19, 37) sont agencés de sorte que la largeur de profil maximum de la pâle de rotor (108) se trouve dans une plage de 4 m ou moins, lorsque le segment de pied (11) est relié à la pale de rotor (108).

4. Caisson arrière d'éolienne selon la revendication 1,
**caractérisé en ce que** les saillies du segment de pied et du ou des segments de tête sont agencées le long d'une voie courbe, dans lequel la courbure de la voie correspond de préférence au tracé de contour de la pale de rotor.

5. Caisson arrière d'éolienne selon l'une quelconque des revendications 1 à 4,
**caractérisé en ce que** les saillies sont réalisées en tant que pattes, et présentent de préférence une natte en deux couches de matériau composite de fibres ou plus, dans lequel de préférence les saillies présentent respectivement un corps de mousse entouré par la natte.

6. Caisson arrière d'éolienne (112) selon la revendication 2,
**caractérisé en ce que** les rails peuvent être amenés en prise les uns avec les autres, de préférence par enfilage.

7. Caisson arrière d'éolienne (112) selon la revendication 6,
**caractérisé en ce que** les rails (23, 25, 27, 29, 47, 49) au niveau du segment de pied (11) ou les rails correspondants (41, 43) du segment de tête (13, 15, 35) associé présentent un profil en queue d'aronde, ou que les rails (23, 25, 27, 29, 47, 49) du segment de pied (11) et les rails correspondants (41, 43) du ou des segments de tête (13, 15, 35) sont réalisés de manière identique, présentent de préférence une coupe transversale sensiblement en forme de L.

8. Caisson arrière d'éolienne (112) selon l'une quelconque des revendications précédentes,
**caractérisé en ce qu'**au moins deux, de préférence trois ou quatre, segments de tête sont associés au segment de pied (11).

9. Caisson arrière d'éolienne (112) selon l'une quelconque des revendications précédentes,
**caractérisé en ce que** la surface côté pression (3) et la surface côté aspiration (1) sont délimitées au niveau du côté de liaison respectivement par une arête (9a, 9b), dont le tracé d'arête respectif est adapté au contour de la surface de liaison d'une pale de rotor (108).

10. Caisson arrière d'éolienne (112) selon l'une quelconque des revendications précédentes,
**caractérisé en ce qu'**une ou plusieurs zones pour l'application d'adhésifs, de préférence colle, sont préparées à l'intérieur du caisson arrière (112).

11. Caisson arrière d'éolienne (112) selon l'une quelconque des revendications précédentes,
**caractérisé en ce que** le segment de pied (11) et/ou le ou les segments de tête (13, 15, 35) présentent dans la zone de la subdivision respectivement une traverse (31, 33, 39), qui s'étend de la surface côté pression (3) à la surface côté aspiration (1), dans lequel le rail ou les rails sont agencés respectivement sur les traverses.

12. Caisson arrière d'éolienne (112) selon l'une quelconque des revendications précédentes,
**caractérisé par** des moyens d'arrêt, qui sont prévus pour le blocage ou la libération sélectif de la position relative entre l'élément de pied (11) et l'au moins un segment de tête à l'état couplé, de préférence en tant que liaison par boulon.

13. Pale de rotor d'éolienne (108), avec un élément porteur, une racine de pale de rotor (21) comprise par l'élément porteur pour l'installation sur un rotor (106) de l'éolienne (100), une surface de pale côté pression, une surface de pâle côté aspiration, et une arête arrière (7) séparant les surfaces côté pression et aspiration,
**caractérisée en ce qu'**un segment de pied (11) avec le côté de liaison d'un caisson arrière (112) selon l'une quelconque des revendications 1 à 12 est monté au niveau d'une surface de liaison dans la zone de la racine de pale de rotor (21) de la pale de rotor (108), dans laquelle de préférence le segment de pied (11) est couplé avec un ou plusieurs segments de tête (13, 15, 35) de sorte qu'un caisson arrière selon l'une quelconque des revendications 1 à 12 est réalisé au niveau de la pale de rotor (108).

14. Éolienne (100), avec une tour (102), une nacelle (104), un rotor (106),
**caractérisée par** au moins une pale de rotor d'éolienne (108) selon la revendication 13 reliée au rotor (106).
